# EUROPEAN PATENT APPLICATION

(11) **EP 1 288 114 A2**
(43) Date of publication of application: **05.03.2003**
(21) Application number: 02019260.5
(22) Date of filing: 28.08.2002
(51) Int. Cl.: B62D 49/00, B62D 29/04, B62D 25/06, B62D 25/20

(54) **Utility vehicle**

(30) Priority: 29.08.2001 US 945540
(71) Applicant: DEERE & COMPANY, Moline, Illinois 61265-8098 (US)
(72) Inventor: Arthur, John Raymond, Grovetown, GA 30813 (US); Knight, Daniel James, Lexingtion, KY 40513 (US); David, Michael, Martinez, GA 30907 (US)
(74) Representative: Magin, Ludwig Bernhard

(57) **Abstract**

For a utility vehicle (10) a composite molded plastic floor and fender structure (30) is supported on a chassis (16) of the vehicle (10). The floor and fender structure (30) includes a foot supporting region (42), a seat supporting region (44) and two fenders (54, 56) all formed of a composite RIM plastic material. The unitary floor and fender structure (30) simplifies manufacture of the vehicle (10) as well as providing a lightweight, durable structure.

## Description

The invention relates to a utility vehicle having a chassis supported on wheels.

Utility vehicles such as compact tractors include a frame or chassis supported on wheels, the chassis supporting an operator area or cab. The operator area includes a floor panel and fender panels, typically made from stamped steel sheets and welded together. The floor panels support a seat. The fender panels partially surround or enclose the large rear wheels of the tractor, protecting the operator from debris flung from the rotating wheels.

Such floor and fender structures are disclosed, for example, in U.S. Patent 4,600,236.

It is an object of the present invention to decrease the cost of manufacturing utility vehicles and particularly, to reduce the manufacturing steps and time required to form a floor and fender structure of separate pieces.

The present invention provides an integral floor and fender structure for a utility vehicle composed of a composite plastic material. The invention provides a floor and fender structure that also integrates frame mounting means, control wiring and cabling chases, battery, controls, and seat mounting surfaces or brackets, and door and window sealing surfaces.

The invention provides a composite integral floor and fender structure that includes a seat supporting surface, control mounting surfaces, a foot supporting surface, spaced apart fender covering surfaces, side rails for door/window sealing and a frame mounting means. The side rails are located adjacent to the door opening to increase the strength of the floor structure at the doorways for stepping on and stepping off the vehicle. The side rails also increase the overall rigidity of the floor and fender structure as well as provide a sealing surface for the doors.

Numerous other advantages and features of the present invention will become readily apparent from the following detailed description of the invention and the embodiments thereof, from the accompanying drawings.
- Figure 1: is an elevational view of a compact tractor incorporating a floor and fender structure of the present invention;
- Figure 2: is a perspective view of the floor and fender structure utilized in the utility vehicle of Figure 1,
- Figure 3: is a perspective bottom view of the floor and fender structure shown in Figure 2;
- Figure 4: is a sectional view of one laminate arrangement of the floor and fender structure of the invention;
- Figure 5: is a perspective view of the floor and fender structure and a steel frame applied onto the floor and fender structure;
- Figure 6: is a front view of the floor and fender structure and frame of figure 5 showing a rear section; and
- Figure 7: is a front view of the floor and fender structure and frame of Figure 5 showing a front section.

While this invention is susceptible of embodiment in many different forms, there are shown in the drawings, and will be described herein in detail specific embodiments thereof with the understanding that the present disclosure is to be considered as an exemplification of the principles of the invention and is not intended to limit the invention to the specific embodiments illustrated.

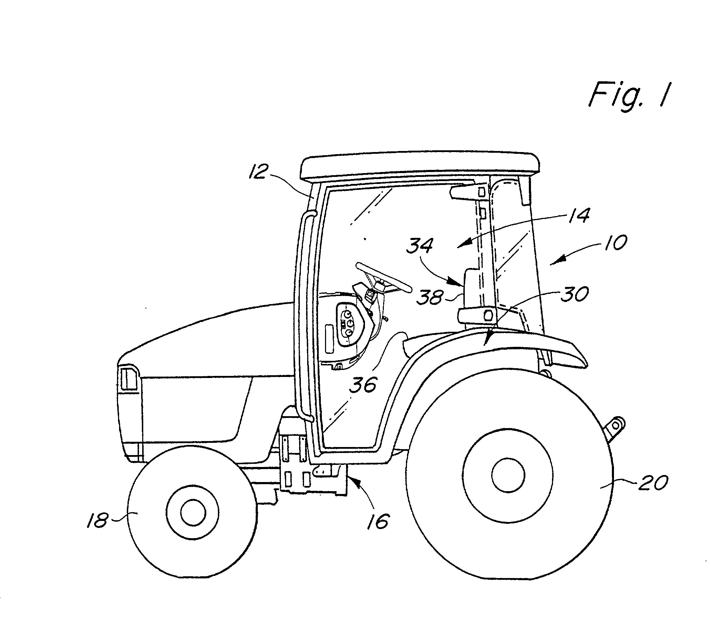

Figure 1 illustrates a utility vehicle 10, such as a compact tractor, incorporating the present invention. The utility vehicle 10 includes an operator area or cab 14 supported on a chassis 16 which is supported on front wheels 18 and larger rear wheels 20. A floor and fender structure 30 is supported on the chassis 16. The floor and fender structure 30 supports an operator's seat 34 including a seat portion 36 and a back portion 38.

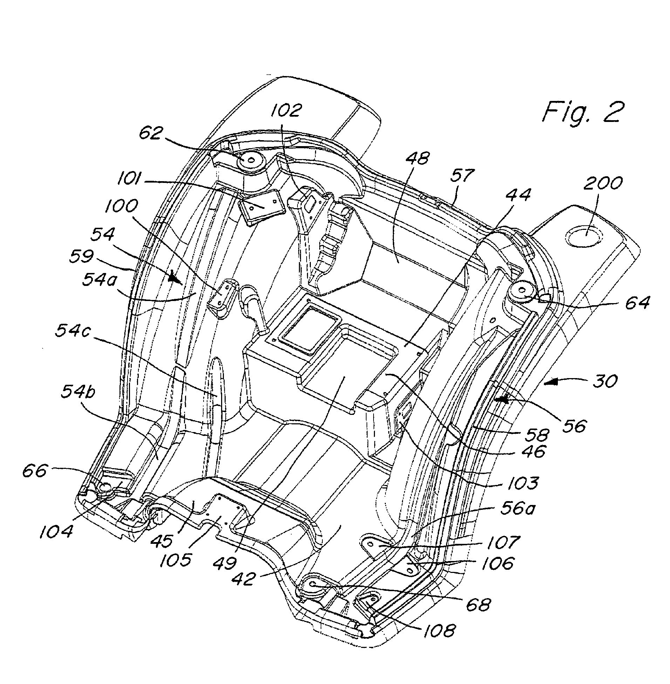

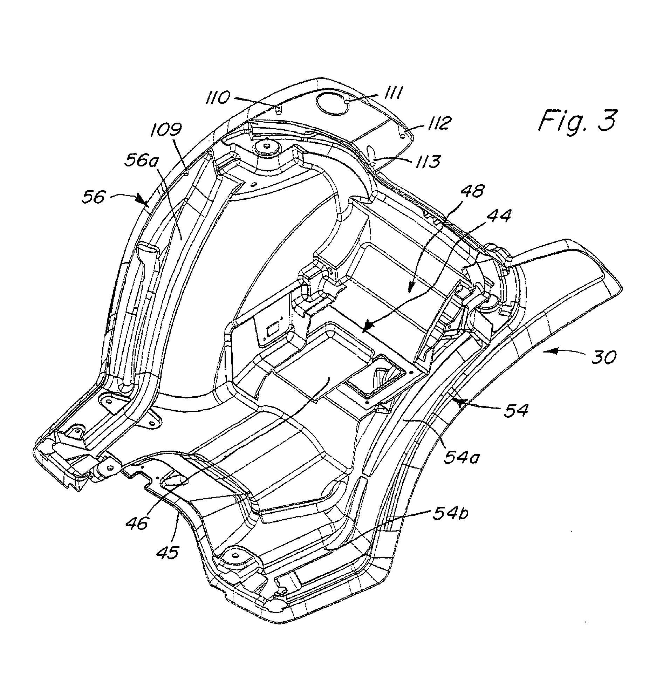

Figures 2-3 illustrate the floor and fender structure 30. The floor and fender structure 30 includes a foot supporting area 42, a seat supporting region 44, including a seat support 46 and rear wall 48. The structure 30 further includes a first fender 54 and a second fender 56. The first fender 54 includes a raised rail 54a and a recessed rail 54b, substantially in line, to accommodate a steel frame 12. The recessed rail 54b extends across the foot supporting area 42. The first fender 54 further includes an oblique recessed rail 54c which extends from the fender 54 down into the foot supporting area 42. The recessed rail 54c provides a chase for electrical wires and mechanical cables for controls.

The second fender 56 includes a recessed rail 56a which extends down the fender and across the foot supporting area 42 to accommodate a steel frame 12. At a front of the foot supporting area 42 is a humped area or "tunnel" 45 for providing clearance for the drive train beneath the floor and fender structure 30.

The structure 30 includes mounting points 62, 64 to mount a top portion of the structure 30 to the chassis, and lower mounting points 66, 68 for attaching the structure 30 to the chassis. Mounting points can interface with isolation mounts.

The structure 30 includes mounting surfaces and features 100-113 to allow mounting of controls, a battery, a fuel tank, a step and a steering column. Mounts 100-103 are for the controls, mount 104 for the battery, mounts 106-113 for the fuel tank, and mount 105 is for the steering column. Hole 200 allows the fuel tank filler neck to penetrate the structure 30. Feature 49 is for operator's manual and tool storage.

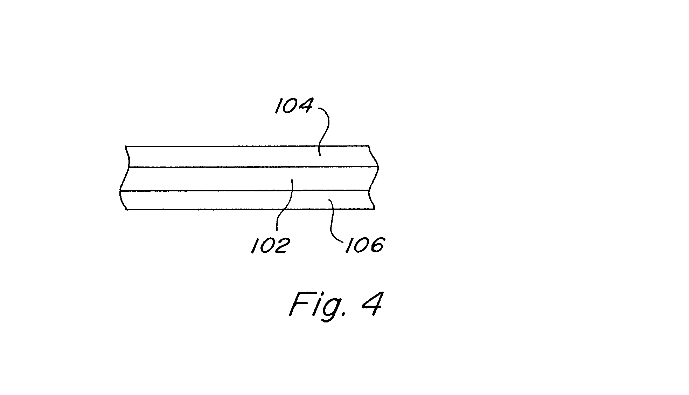

Figure 4 illustrates a cross-section of a composite used for the structure 30. A layer of fiberglass 102 is sandwiched by a top first layer of RIM material 104 and a bottom second layer of RIM material 106. The composite gives the structure 30 exemplary rigidity and strength while retaining a lightweight character.

Alternatively, the structure 30 can be composed of a generally homogeneous thickness of fiberglass reinforced RIM plastic.

The plastic materials of either structure can be reinforced with fiberglass and/or structural foam to add rigidity.

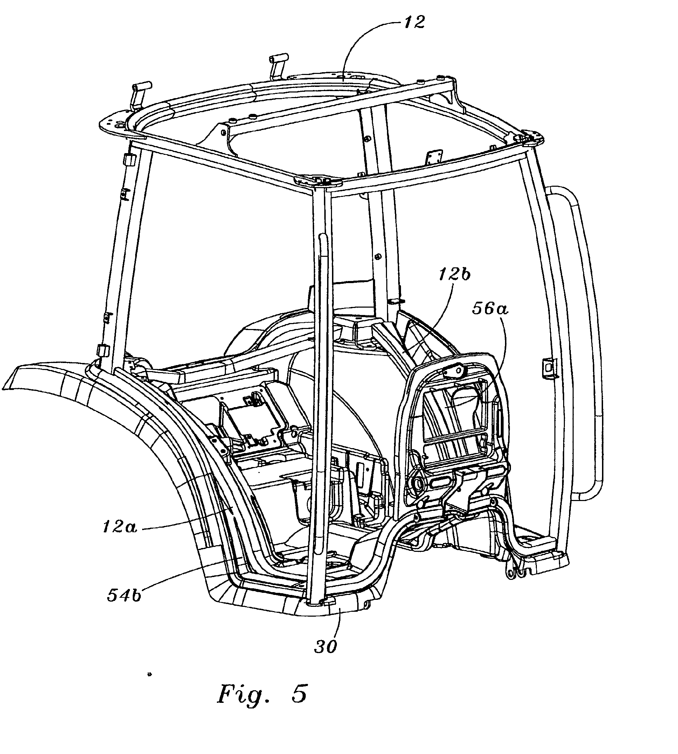

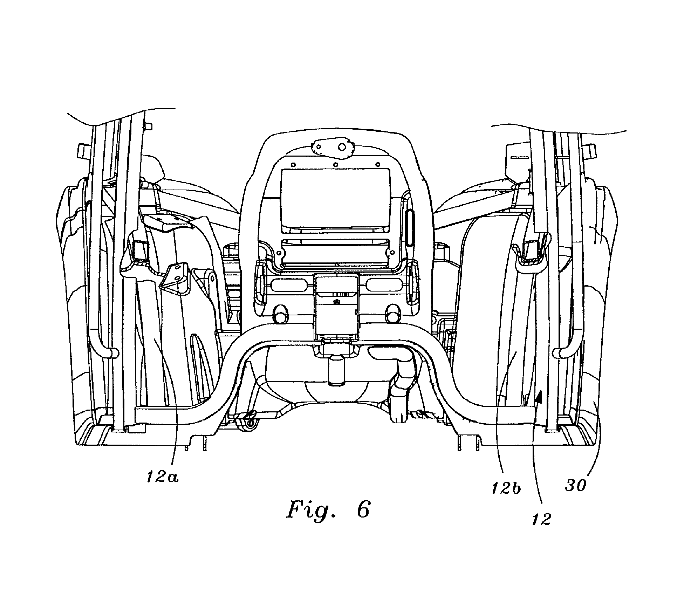

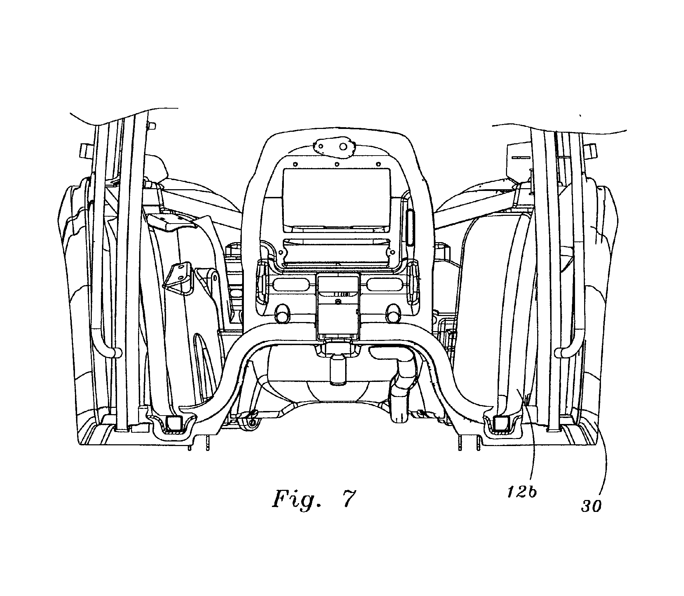

Figures 5 through 7 illustrate the frame 12 mounted on the floor and fender structure 30. Side members 12a and 12b fit within the side recessed rails 54b, 54a. The frame 12 can be attached to the structure 30 by fasteners or other means. The side members 12a, 12b can also be adhesively secured into the recessed rails.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. Utility vehicle (10) having a chassis (16) supported on wheels (18, 20) **characterized by** an integral floor and fender structure (30) comprising a reinforced composite plastic material.

2. Utility vehicle according to claim 1, **characterized in that** said plastic layer comprises a fiberglass layer (102).

3. Utility vehicle according to 2, **characterized in that** said fender structure (30) comprises a fiberglass layer (102) laminated between a top RIM layer (104) and a bottom RIM layer (106).

4. Utility vehicle according to one or several of the previous claims, **characterized in that** said floor and fender structure (30) includes right and left fenders (54, 56) and a seat supporting platform (44) integrally formed between said right and left fenders (54, 56).

5. Utility vehicle according to one or several of the previous claims, **characterized in that** said floor and fender structure (30) comprises a foot supporting area (42) and formed rail portions (54a, 54b, 54c, 56a) extending along said fenders (54, 56) and into said foot supporting area (42).

6. Utility vehicle according to one or several of the previous claims, **characterized in that** said fenders (54, 56) include reinforced portions for interface with isolation mounts.

7. Utility vehicle according to one or several of the previous claims, **characterized in that** said floor and fender structure (30) includes a foot supporting area (42), seat and seatback supporting areas (44), fender covering area and a rear deck region.

8. Utility vehicle according to one or several of the previous claims, **characterized in that** said floor and fender structure (30) comprises a center layer covered on opposite surfaces by RIM material.

9. Utility vehicle according to claim 8, **characterized in that** said RIM material comprises a composite plastic material.

10. Utility vehicle according to claim 8 or 9, **characterized in that** said center layer comprises fiberglass.

11. Utility vehicle according to one or several of the previous claims, **characterized in that** floor and fender structure (30) comprises a laminated structure.

12. Utility vehicle according to claim 11, **characterized in that** at least one layer is molded onto said plastic layer.

13. Utility vehicle according to one or several of the previous claims, **characterized in that** said floor and fender structure (30) comprises integral features for mounting a steel frame (12) and/or for mounting controls, a steering, column, a battery, a fuel tank, and a step and/or for mounting interior trim panels and/or for storage of an operator's manual and tools and/or for storage forming window and door sealing surfaces.
